Europäisches Patentamt

European Patent Office

Office européen des brevets

(19)

(11) Veröffentlichungsnummer: **0 073 408**
**B1**

(12)

# EUROPÄISCHE PATENTSCHRIFT

(45) Veröffentlichungstag der Patentschrift:
**02.04.86**

(51) Int. Cl.⁴: **B 60 B 5/02,** B 60 B 9/26

(21) Anmeldenummer: **82107479.6**

(22) Anmeldetag: **17.08.82**

(54) Verfahren zur Herstellung eines Kunststoffrades.

(30) Priorität: **29.08.81 DE 3134249**

(43) Veröffentlichungstag der Anmeldung:
**09.03.83 Patentblatt 83/10**

(45) Bekanntmachung des Hinweises auf die Patenterteilung:
**02.04.86 Patentblatt 86/14**

(84) Benannte Vertragsstaaten:
**BE DE FR GB IT NL SE**

(56) Entgegenhaltungen:
**EP - A - 0 014 990**
**EP - A - 0 051 996**

(73) Patentinhaber: **BAYER AG, Konzernverwaltung RP**
**Patentabteilung, D-5090 Leverkusen 1 Bayerwerk (DE)**

(72) Erfinder: **Schauf, Dieter, Ing.grad., Am Sonnenhang 29,**
**D-5653 Leichlingen 2 (DE)**
Erfinder: **Protoschill, Klaus, Ing.grad.,**
**Unterscheiderweg 32, D-5060 Bergisch Gladbach 2 (DE)**
Erfinder: **Oberbach, Karl, Dr., Leuchter Gemark 3,**
**D-5060 Bergisch Gladbach 2 (DE)**
Erfinder: **Depcik, Hans-Werner, Ing.grad.,**
**Vennstrasse 124a, D-4000 Düsseldorf 12 (DE)**

**Beschreibung**

Die Erfindung betrifft ein Verfahren zur Herstellung eines Kunststoffrades aus verstärktem Kunststoff, bestehend aus Felge, Speichen und Nabenhalterung (EP-A-0 014 990).

Bei diesem bekannten Speichenrad sind auf einem Mittelteil beidseitig flache Scheiben aufgesetzt. Das einstückige Mittelteil besteht aus gerippten, konisch nach aussen verjüngten Speichen, die Nabenhalterung und Felge verbinden, wobei letztere jeweils zwischen den Speichen mit einer bis zur Mitte in der Höhe zunehmenden Rippe versehen ist. Das Mittelteil kann im Spritzgiess-Verfahren aus verstärktem Kunststoff hergestellt sein.

Eine nähere Aussage über die Art des Anspritzens beim Mittelteil eines Kunststoffrades fehlt. Es muss deshalb nach den Regeln der Technik angenommen werden, dass dieses Kunststoffteil im Bereich der grössten Masseansammlung – nämlich an der Nabenhalterung – angespritzt wird. Was den Nachteil hat, dass die Masseströme in der Felge zusammenfliessen, wodurch an diesen Stellen die Materialfestigkeit geschwächt ist, sodass insbesondere bei Schlagbeanspruchung die Felge dort leicht bricht.

Der Erfindung liegt die Aufgabe zugrunde, ein Verfahren zur Herstellung eines Kunststoffspeichenrades zu schaffen, welches erlaubt, die Materialeigenschaften des Rades bei mechanischer Beanspruchung, insbesondere auf Schlag (Bordstein), voll zu nutzen, welches dem Rad gute Rundlaufeigenschaften vermittelt und welches nur einen Arbeitsgang aufweist.

Die Aufgabe wird erfindungsgemäss dadurch gelöst, dass die Masseströme in mindestens zwei Speichen angespritzt und so geführt werden, dass sie in den dazwischenliegenden, in ungerader Zahl an der Felge angeordneten Speichen zusammenfliessen.

Wenn der Quotient aus Speichenzahl durch Anzahl der Anspritzstellen eine gerade Zahl ergibt, liegen die Zusammenflussnähte bei Vorgabe entsprechender Fliesswiderstände in den Speichen je nach Erfordernissen im Kopf-, Mittel-, oder Fussbereich, so dass die Verstärker-Elemente in der freigespannten Felge zwangsläufig vorzugsweise tangential in Umfangsrichtung ausgerichtet sind. Die optimale Festigkeit des Werkstoffes kann dadurch genutzt werden. Das bedeutet, dass durch Vermeidung des Zusammenflusses der Masseströme in der Felge diese eine um das fünf- bis sechsfache grössere Schlagbeanspruchung, wie sie beispielsweise beim Auffahren auf einen Bordstein auftritt, aufnehmen kann.

Die Ablenkung der Verstärker-Elemente im Bereich der Speichen macht sich festigkeitsmässig wegen der an dieser Stelle vorhandenen Abstützung durch die Speichen nicht bemerkbar. Die kritischen Zusammenflüsse der Masseströme sind im Bereich der Verstärkungen wie Speiche bzw. Überlauf angeordnet. Das Kunststoffrad zeichnet sich weiter durch hohe Rundlaufgenauigkeit aus, weil durch die vorzugsweise in Radumfangsrichtung ausgerichteten Verstärker-Elemente, die aus Mineralfaser bestehen können, ein über dem gesamten Umfang gleichmässiger Aufbau des Materials erzielt wird. Selbstverständlich kann auch dieser Effekt mit Polymeren erreicht werden, die eine flüssigkristalline Schmelze bilden.

Ein weiterer Vorteil des Verfahrens ist, dass das Kunststoffrad in einem Arbeitsgang komplett fertig ist.

An Kunststoffen haben sich glasfaserverstärkte, thermoplastisch verarbeitbare Polyamid-Formmassen besonders bewährt, die aufgebaut sind aus:

A  PA 6, PA 6.6, deren Co-Polyamiden oder Gemischen mit Grenzviskositäten von 2,5 bis 3,5 dl/g, vorzugsweise 2,7–3,0 dl/g, gemessen in m-Kresol,
B  einem Elastifikator,
C  einem faserförmigen Verstärkungsmittel.

Weiter zeigen gute Ergebnisse glasfaserverstärkte, thermoplastisch verarbeitbare Polyester-Formmassen, die aufgebaut sind aus:

A  einer thermoplastischen Harzphase
B  einem Elastifikator,
C  einem faserförmigen Verstärkungsmittel.

Die Harzphase A besteht zu 75 bis 100%, bevorzugt zu 80–95%, aus Polyalkylenterephthalat und 25 bis 0%, bevorzugt 20 bis 5%, aus aromatischem Polycarbonat.

Unter Polyalkylenterephthalat wird verstanden PBTP oder PETP, Copolyester auf Basis PBTP oder PETP sowie Mischungen der genannten Polyester in jedem beliebigen Mischungsverhältnis mit Grenzviskositäten von 0,60 bis 1,20 dl/g, gemessen in einem Lösungsmittelgemisch aus 50 Teilen Phenol und 50 Teilen 1,2-Dichlorbenzol. Unter aromatischem Polycarbonat wird bevorzugt verstanden ein Biphenol-A-Polycarbonat mit Grenzviskositäten von 0,45 bis 0,55 dl/g, gemessen in Methylenchlorid.

Die vorgenannten Produkte sind schlagzäh modifiziert durch geeignete Elastomere in einer Menge von 1 bis 25%, bevorzugt 5 bis 20%, bezogen auf die Mischung von A und B. Unter «geeigneten Elastomeren» werden Schlagfestmodifikatoren verstanden, die als diskrete Partikel mit einer Teilchengrösse von 0,1 bis 0,6 μm, bevorzugt 0,2 bis 0,5 μm, in der Harzphase A dispergiert sind.

Die Produkte enthalten faserförmige Verstärkungsmittel, bevorzugt mineralische faserförmige Produkte, wie z.B. Glasfasern, mit einem L/D-Verhältnis von 10/1 bis 50/1 in einer Menge von 10 bis 50%, bevorzugt 20 bis 40% bezogen auf die Gesamtmischung von A+B+C.

Beispiele der Erfindung sind in den Zeichnungen dargestellt und werden im folgenden näher beschrieben.

Es zeigen:

Fig. 1 Ansicht eines 8-Speichen-Kunststoffrades,

Fig. 2 Querschnitt durch Felge,

Fig. 3 Ansicht eines Rades mit federnden Speichen.

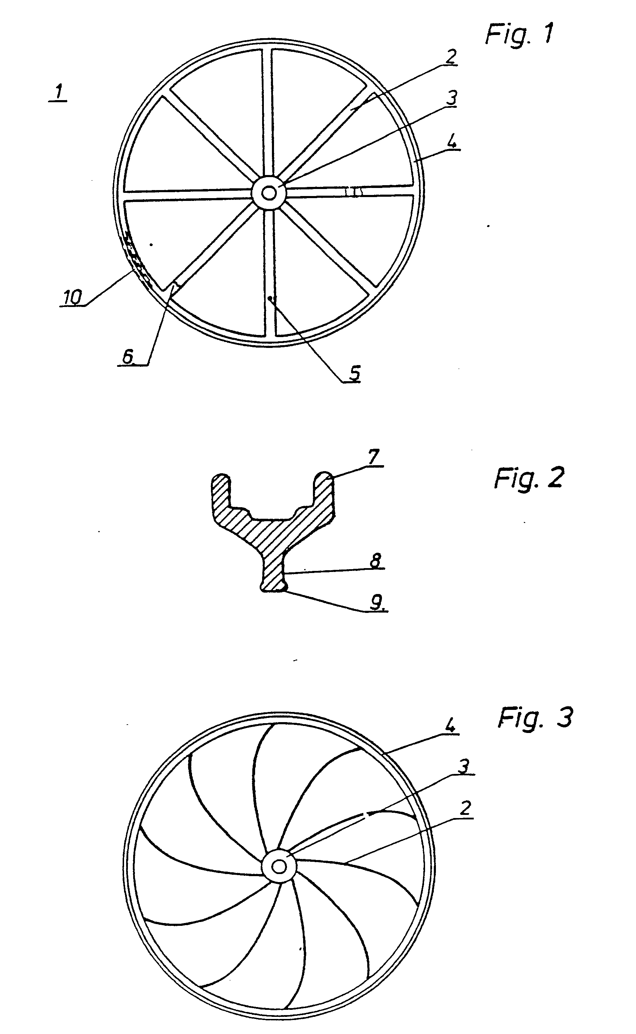

In Fig. 1 ist ein Kunststoffrad 1 mit acht I-förmigen Speichen 2 dargestellt, die in der Mitte mit einer Nabenhalterung 3 und aussen mit der Felge 4 verbunden sind. Die Anspritzpunkte 5 sind in dem Verhältnis: Anzahl Speichen 2 dividiert durch Anzahl Anspritzpunkte 5 angeordnet. Das ergibt eine gerade Zahl. Der Zusammenfluss 6 der Masseströme liegt im Bereich innerhalb der Speiche 2, ggf. im nicht dargestellten Überlauf.

In Fig. 2 ist ein Querschnitt der Felge 4 dargestellt, wobei das Felgenhorn 7 bis zur Mitte entsprechend der Zunahme der Festigkeitsbeanspruchung in der Materialdicke wächst. In der Symmetrie-Ebene schliesst ein angespritzter Ring 8 mit verstärktem Fuss 9 an, wobei letzterer das Trägheitsmoment wesentlich vergrössert.

In Fig. 3 ist die Speiche 2, die die Nabenhalterung 3 und die Felge 4 verbindet, gebogen, so dass sie im Falle der Belastung federnd nachgibt.

**Patentanspruch**

1. Verfahren zur Herstellung eines Kunststoffrades aus verstärktem Kunststoff, bestehend aus Felge, Speichen und Nabenhalterung, dadurch gekennzeichnet, dass die Masseströme in mindestens zwei Speichen (2) angespritzt und so geführt werden, dass sie in den dazwischenliegenden, in ungerader Zahl an der Felge (4) angeordneten Speichen (2) zusammenfliessen.

**Claim**

Process for producing a plastic wheel of reinforced plastic consisting of a rim, spokes and a hub mount, characterised in that the streams of material are injected into at least two spokes (2) and guided in such a way that they coalesce in the intermediate spokes (2) arranged in an odd number on the rim (4).

**Revendication**

Procédé de fabrication d'une roue en matière synthétique renforcée, cette roue comprenant une jante, des rayons et un support de moyeu, caractérisé en ce que les courants de masse sont injectés dans au moins deux rayons (2) et sont guidés de telle sorte qu'ils se réunissent dans les rayons intermédiaires (2) disposés en un nombre impair sur la jante (4).

Fig. 1

Fig. 2

Fig. 3